# EUROPÄISCHE PATENTSCHRIFT

(11) **EP 0 668 964 B1**
(45) Veröffentlichungstag und Bekanntmachung des Hinweises auf die Patenterteilung: **29.12.1997**
(21) Anmeldenummer: 94924707.6
(22) Anmeldetag: 02.09.1994
(51) Int. Cl.: F02D 41/34

(54) **EINRICHTUNG ZUR ELEKTRONISCHEN NACHBILDUNG DER POSITION EINES BAUTEILES**
DEVICE FOR ELECTRONICALLY SIMULATING THE POSITION OF A COMPONENT
DISPOSITIF DE SIMULATION ELECTRONIQUE DE LA POSITION D'UNE PIECE

(30) Priorität: 15.09.1993 DE 4331226
(43) Veröffentlichungstag der Anmeldung: 30.08.1995
(73) Patentinhaber: ROBERT BOSCH GMBH, 70442 Stuttgart (DE)
(72) Erfinder: LOHSE, Mathias, D-70190 Stuttgart (DE); EITRICH, Frank-Thomas, D-72760 Reutlingen (DE); HYNES, Patrick, F-77300 Fontainebleau (FR)
(86) Internationale Anmeldenummer: DE9401011
(87) Internationale Veröffentlichungsnummer: WO9508056

(56) Entgegenhaltungen:
- EP-A- 0 175 576
- EP-A- 0 495 352
- DE-A- 2 640 791

## Beschreibung

### Stand der Technik

Die Erfindung betrifft eine Einrichtung zur elektronischen Nachbildung der Position eines Bauteiles, insbesondere der Winkelstellung einer Kurbelwelle, mit einem ersten Zähler, dessen Zählstand ein Maß für die jeweils eingenommene Position des Bauteiles ist, wobei der erste Zähler mit einem Zähltakt gezählt wird, der von dem jeweiligen Eintritt eines periodischen Ereignisses, das jeweils eine Position des Bauteiles markiert, bestimmt wird.

Elektronische Zähler werden in der Technik auf vielerlei Gebieten eingesetzt. Sie dienen der quantitativen Erfassung eines sich stets wiederholenden Vorgangs. Die Zählfunktion wird dabei durch Anlegen einer ereignisabhängigen Taktfrequenz an den Eingang einer zum Zähler gehörenden Zählschaltung ausgelöst. Die Durchführung einer Ereignisbewertung ist bekannt, beispielsweise eine Gatterlogik vorzuschalten, die ein gezieltes Ausblenden einzelner Zähltakte ermöglicht, so daß die Zählschaltung entsprechend langsamer zählt. Weiterhin ist bekannt, durch Vorschalten eines Frequenzteilers die Taktfrequenz in einem, fest vorgegebenen Verhältnis herabzusetzen, so daß die Zählschaltung ebenfalls entsprechend langsamer zählt.

Wird eine derartige Zählschaltung beispielsweise bei einer Bestimmung der aktuellen Kurbelwellenposition einer Brennkraftmaschine eingesetzt, sind den bekannten Zählschaltungen Grenzen gesetzt, die nur eine Auflösung der Kurbelwellenposition in relativ großen Winkelschritten zuläßt. Da jedoch einer relativ genauen Winkelbestimmung der Kurbelwellenposition, insbesondere zum Auslösen von steuersignalen in nachgeschalteten Seriensteuergeräten zur Motorsteuerung, eine große Bedeutung zukommt, sind die mit den bekannten Zählschaltungen erzeugbaren recht ungenauen Steuersignale in der Praxis von geringerem Interesse.

Aus der EP 495 352 ist bereits eine Einrichtung zur elektronischen Nachlbildung der Position eines Bauteils bekannt, wobei ein erster Zähler mit einem Zähltakt gezählt wird und der jeweilige Zählerstand ein Maß für die Position des Bauteils ist. Weiterhin werden vom Bauteil periodische Ereignisse zur Verfügung gestellt, die jeweils eine Position des Bauteils markieren. Durch diese Ereignisse steuert ein zweiter Zähler einen dritten Zähler, wobei der dritte Zähler schneller als der zweite Zähler zählt. Zwischen dem Eintritt der Ereignisse durchläuft der dritte Zähler mehrmals einen vorgebbaren Wertebereich. Der erste Zähler zählt Impulse des dritten Zählers und die periodischen Ereignisse. Dabei können einzelne Impulse des dritten Zählers unterdrückt werden.

### Vorteile der Erfindung

Die erfindungsgemäße Einrichtung mit den im Hauptanspruch genannten Merkmalen hat demgegenüber den Vorteil, daß eine Verfeinerung der Erfassung der periodisch auftretenden Ereignisse durchführbar ist, so daß eine recht genaue aktuelle Ereignisbewertung erfolgen kann. Hierdurch ist es insbesondere bei der Verwendung der Einrichtung in einer Stellungsbestimmungseinrichtung der aktuellen Kurbelwellenposition einer Brennkraftmaschine möglich, den momentanen Kurbelwellenwinkel sehr exakt zu bestimmen und durch die entsprechende genaue elektronische Nachbildung des aktuellen Kurbelwellenwinkels ein Steuersignal an eine nachfolgende elektronische Steuereinrichtung für den Betrieb einer Brennkraftmaschine, vorzugsweise um eine Einspritzungssteuerung und/oder eine Zündungssteuerung zu realisieren, bereitzustellen. Da ein zweiter Zähler in Abhängigkeit des Eintritts eines ersten Ereignisses einen dritten, schneller als der zweite Zähler zählenden, bis zum Eintritt eines nächsten Ereignisses mehrmals einen vorgebbaren Wertebereich durchlaufenden Zähler startet und mit jedem Erreichen eines Endwertes des Wertebereiches ein Impuls, eines den Zähltakt ergebenden Grundtaktes erzeugt wird, ist es sehr vorteilhaft möglich, die Periode zwischen dem Eintritt zweier aufeinanderfolgender Ereignisse, die eine Winkelbasis repräsentiert, in eine Zeitbasis zu überführen und eine Verfeinerung der Zeitbasis und damit der periodisch auftretenden Ereignisse zu erreichen. Insbesondere läßt sich hiermit erreichen, daß der Lauf eines die tatsächliche Winkelposition elektronisch nachbildenden Zählers von der Projektion auf ein nachfolgendes erwartetes Ereignis bestimmt werden kann. Somit wird eine sehr hohe Genauigkeit hinsichtlich des tatsächlichen aktuellen Kurbelwellenwinkels erreicht.

Nach einer Weiterbildung der Erfindung ist vorgesehen, daß der Eintritt der Ereignisse auf Plausibilität bewertet wird, wobei insbesondere die zwischen einem aktuellen Ereignis und einem nächsten erwarteten Ereignis auftretenden Ereignisse ausgeblendet werden. Durch diese Plausibilitätserkennung kann dem Fehlerfall eines zusätzlichen Ereignisses, beispielsweise durch Signalprellen begegnet werden. Indem die fehlerhaften Ereignisse ausgeblendet werden, wird verhindert, daß diese eine Beinflussung des den tatsächlichen Kurbelwellenwinkel elektronisch nachbildenden Zählers bewirken können.

Weitere vorteilhafte Ausgestaltungen der Erfindung ergeben sich aus den übrigen in den Unteransprüchen genannten Merkmalen.

Die Zeichnungen veranschaulichen die Erfindung anhand von Ausführungsbeispielen, und zwar zeigt:

Zeichnung
- Figur 1: ein Blockschaltbild der elektronischen Zählschaltung,
- Figur 2: eine Verdeutlichung der Grundtakterzeugung und
- Figur 3: eine Verdeutlichung der Plausibilitätskontrolle.

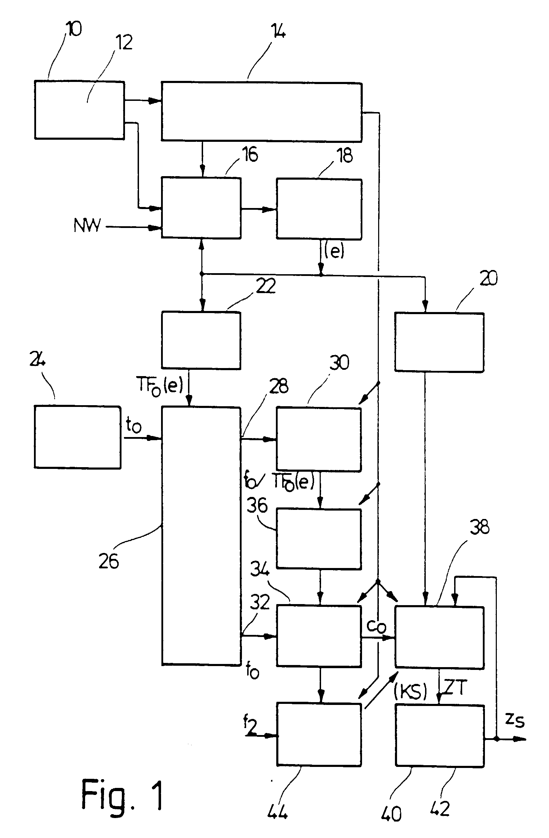

Das in der Figur 1 dargestellte Blockschaltbild weist einen Sensor 10 auf, der als Drehwinkelgeber 12 ausgebildet ist und die Winkelstellung einer nicht dargestellten Kurbelwelle einer Brennkraftmaschine erfaßt. Der Sensor 10 bildet dabei ein digitales Signal beliebiger periodischer Signalform und wird durch ein auf der Kurbelwelle angeordnetes, ebenfalls nicht dargestelltes, Geberrad aktiviert. Das Geberrad besitzt dabei über den Umfang verteilte äquidistante Zähne und eine Lücke, deren Länge beispielsweise dem Wegfall zweier Zähne entspricht. Jeder dieser Zähne bewirkt ein Sensorsignal, wobei im weiteren entweder die negativen oder die positiven Flanken des Sensorsignals ausgewertet werden. Die auf dem Geberrad angeordnete Lücke ist einem festen genau bekannten Kurbelwellenwinkel zugeordnet und bewirkt jeweils ein Synchronisationssignal. Das Auftreten eines durch eine positive und/oder negative Signalflanke bewirkten digitalen Signals wird im folgenden als Ereignis bezeichnet. In einer Weiterbildung der Erfindung können auch nichtäquidistante Zähne und mehrere Zahnlücken verarbeitet werden, sowie die Auswertung sowohl der negativen wie auch der positiven Sensorsignalflanken.

Die von dem Sensor 10 ausgehenden Ereignisse werden einer Ereignisaufbereitung 14 zugeführt. Durch die Ereignisaufbereitung 14 wird eine Plausibilitätserkennung der Ereignisflanken durchgeführt, um den Fehlerfall eines zusätzlichen Ereignisses, zum Beispiel durch Signalprellen, zu erkennen. Durch die Plausibilitätsprüfung wird ein Großteil der möglichen Fehlerquellen aus dem Eingangssignal ausgefiltert. Die Ereignisse werden weiterhin einer Synchronisierung 16 zugeführt, die das Ereignissignal einem Ereigniszähler 18 und über diesen einer elektronisch lesbaren Ereignistabelle 20 zuführt. Einmal pro Kurbelwellenumdrehung und damit pro Umdrehung des Geberrades, findet an der dort angeordneten Lücke ein Synchronisationsereignis statt, das von der Synchronisierung 16 erkannt wird und die damit in Abhängigkeit vom Stand eines nicht dargestellten Nockenwellensignalgebers, der ein Nockenwellensignal NW gibt, einen der zwei möglichen Synchronisationswinkel zur Verfügung stellt. Dieses ist notwendig, da beispielsweise bei einem Viertaktverbrennungsmotor der Motorzyklus 720° einer Kurbelwellenumdrehung beträgt.

Mit jedem neuen Auftreten eines Synchronisationsereignisses wird der in der Ereignistabelle 20 abgelegte Sollwinkel entsprechend überschrieben. Der Ereignis zähler 18 zählt die Anzahl der zwischen zwei Synchronisationsereignissen auftretenden Ereignisse und meldet diese Anzahl an die Ereignistabelle 20 weiter. Da durch die bekannte Anzahl der auf dem Geberrad angeordneten Zähne die jeweils einem Ereigniseintritt zuzuordnende Winkelverstellung ebenfalls bekannt ist, kann die Ereignistabelle 20 auf den jeweiligen Sollwert fortgeschrieben werden. Der Ereignistabelle 20 kann eine hier nicht dargestellte Korrekturfaktortabelle zugeordnet sein, die eine Korrektur von bekannten drehzahlabhängigen Verzögerungen der Geberradauswertungselektronik durch die Verwendung eines additiven Faktors ermöglicht. Zusätzlich zu der Ereignistabelle 20 wird über den Ereigniszählerstand e eine Ereignisdifferenzzeittabelle 22 indiziert, in der jeweils die Zeit zwischen dem letzten Ereignis und dem aktuellen Ereignis abgelegt wird. Weiterhin ist eine Taktschaltung 24 angeordnet, die an eine Steuerung 26 eine konstante Frequenz fo liefert. Die Frequenz fo wird mit einem von der Ereignisdifferenzzeittabelle 22 ausgehenden Teilerfaktor TFo bewertet, so daß an einem ersten Ausgang 28 der Steuerung 26 eine Ausgangsfrequenz fo/TFo anliegt. Der Teilerfaktor TFo kann dabei durch den von dem Ereigniszähler 18 ausgehenden Ereigniszählerstand e indiziert werden, indem dessen Größe durch den Zeitabstand zwischen zwei Ereignissen als Ganggeschwindigkeitssignal frei vorgebbar ist. Mit der Frequenz fo/TFo wird ein zweiter Zähler 30 gezählt, der bei einem Wert von 0 startet und einen Wertebereich durchläuft. Der Zähler 30 wird dabei durch den Eintritt eines Ereignisses gestartet und nach Eintritt des nächsten Ereignisses gestoppt und wieder auf 0 zurückgesetzt. Der Zähler 30 übernimmt damit eine relative Zeitmessung zwischen dem Eintritt des letzten Ereignisses und dem Eintritt des aktuellen Ereignisses.

An einem zweiten Ausgang 32 der Steuerung 26 liegt die von der Taktschaltung 24 gelieferte Frequenz fo an. Mit dieser Frequenz fo wird ein dritter Zähler 34 gezählt. Der Zähler 34 ist dabei als Überlaufzähler ausgebildet und durchläuft einen bestimmten Wertebereich, wobei nach Erreichen eines Endwertes der Zähler wieder auf den Anfangswert zurückgesetzt wird und den Wertebereich erneut durchläuft. Da die den Zähler 34 beaufschlagende Zählerfrequenz fo nicht mit einem Teilerfaktor bewertet wird, zählt der Zähler 34 schneller als der Zähler 30.

Die von dem Zähler 30 realisierte Zeitmessung zwischen dem letzten Ereignis und dem aktuellen Ereignis wird in einer Zeittabelle 36 abgelegt, die ein Startsignal an den Zähler 34 auslöst. Mit dem Eintritt eines Ereignisses wird der Zähler 34 dabei gestartet, so daß dieser mit der Frequenz fo den vorherbestimmten Wertebereich durchläuft. Mit jedem Durchlaufen des Wertebereichs wird ein Impuls eines Grundtaktes Co erzeugt. Mit dem Eintritt des nunmehr aktuellen Ereignisses in dem Zähler 30 wird über die Zeittabelle 36 der Zähler 34 wieder in seinen Ausgangszustand versetzt, so daß der Überlauf zähler seine Zählperioden erneut zu durchlaufen beginnt. Da der Zähler 34, wie bereits erwähnt, schneller zählt als der Zähler 30, werden innerhalb der Zeitspanne des Eintretens zweier aufeinanderfolgender Ereignisse eine Vielzahl von Grundtakten Co erzeugt. Durch diese Anordnung der Zähler 30 und 34 wird damit eine Verfeinerung der Zeitebene erreicht. Da der Zähler 34 mit dem Auftreten des aktuellen Ereignisses wieder auf seinen Ausgangszustand gesetzt wird, und ab diesem Zeitpunkt eine neue Grundtaktfrequenz Co erzeugt wird, findet mit dem Zähler 34 eine Projektion auf das nächste Ereignis statt.

Der Grundtakt Co wird einer Nachführschaltung 38 zugeführt, die daraus einen Zähltakt Zt bildet, mit dem eine Zählschaltung 40, die im Beispiel gleichzeitig eine Winkeluhr 42 darstellt, beaufschlagt wird. Die Winkeluhr 42 läuft dabei mit dem vorgegebenen Zähltakt Zt frei. Die Zählschaltung 40 bzw. die Winkeluhr 42 bilden dabei einen Zählerstand ZS. Der Zählerstand ZS der Winkeluhr 42 simuliert in dem beschriebenen Beispiel den Drehwinkel einer Kurbelwelle. Der Drehwinkel wird hierdurch elektronisch nachgebildet und ist einer nachfolgenden Steuerelektronik zuführbar. Die Nachführschaltung 38 ist weiterhin mit der Ereignistabelle 20 sowie über einen Rückkoppelzweig mit der Winkeluhr 42 verbunden. Die Nachführschaltung ermittelt zu jedem Eintritt eines Ereignisses die Differenz zwischen dem in der Ereignistabelle 20 vorgesehenen Sollwert und dem tatsächlichen Zählerstand ZS der Winkeluhr und kann auf diese Weise die Winkeluhr 42 synchronisieren. Hierzu ist die Nachführschaltung 38 mit einem Korrekturzähler 44 verbunden, der mit einer Frequenz f2 gezählt wird und ein Korrektursignal KS an die Nachführschaltung 38 geben kann. Ist der in der Ereignistabelle 20 abgelegte Sollwert gleich dem Zählerstand ZS der Winkeluhr 42, so findet keine Synchronisation statt, und die Winkeluhr 42 läuft mit dem Zählertakt Zt, der gleich dem Grundtakt Co ist. Eine Synchronisation der Winkeluhr 42 erfolgt dabei zu jedem Ereignis. Weicht der Sollwert der Ereignistabelle 20 von dem Zählerstand ZS ab, sind folgende zwei Varianten einer Synchronisation möglich.

In einer ersten Variante läuft die Zählerschaltung 40 bzw. die Winkeluhr 42 mit dem erzeugten Grundtakt Co bzw. dem Zähltakt Zt frei, bis zum Erreichen des aus der Ereignistabelle 20 vorbestimmten Winkeluhrsollwertes. Zu jedem Grundtakt Co bzw. zu jedem n-ten Grundtakt Co, wird dabei ein Zähltakt Zt erzeugt. Wird der vorbestimmte Winkeluhrwert aus der Ereignistabelle 20 erreicht, werden weitere Zähltakte Zt ausgeblendet und die Zählerschaltung 40 bleibt auf dem zum erwarteten Ereignis assoziierten Zählerstand ZS stehen. Durch einen mit jedem eingetretenen Ereignis rückgesetzten, hier nicht dargestellten, Überwachungszähler können die so ausgeblendeten Zähltakte, die sich aus der Differenz der Zähltakte Zt und der Grundtakte Co ergeben, aufaddiert werden, um bei Überlauf eines vorgegebenen Maximalwertes einen Ausfall des Sensors 10 zu detektieren. Weiterhin kann so ein nur einmaliger Ereignisausfall oder eine Dynamik des Drehwinkelgebers 12 außerhalb eines erwarteten Definitionsbereiches korrigiert werden. Der Überwachungszähler kann technisch identisch zum Korrekturzähler 44 sein.

Idealerweise wird ein Ereignis zur gleichen Zeit detektiert zu der die Winkeluhr 42 auf den identischen Zählerstand ZS zählt, der durch den Sollwert der Ereignistabelle 20 vorbestimmt ist. Tritt nun ein Ereignis ein, bevor die Winkeluhr 42 diesen Wert erreicht hat, zählt die Winkeluhr 42 zunächst mit der an dem Korrekturzähler 44 vorgegebenen Höchstfrequenz f2 auf den entsprechenden aus dem Ereigniszähler 20 entnommenen Sollwert weiter. Ist dieser Sollwert erreicht, zählt die Winkeluhr 42 normal mit den Zähltakten Zt weiter. Dieses Ermitteln der Winkeluhrdifferenz, das heißt der Differenz zwischen dem Sollwert und dem Istwert, und das Einfügen einer entsprechenden Anzahl von Korrektursignalen KS zwischen den normalen Zähltakten ZT ist unproblematisch, solange die Frequenz f2 ausreichend hoch ist. Da diese Variante keinen Rückkopplungszweig besitzt, arbeitet sie vollkommen schwingungsfrei. Darüber hinaus ist durch die vorgegebene Maximalzahl von zwischen zwei Ereignissen erzeugten Zähltakten Zt gewährleistet, daß die Winkeluhr 42 stets in der Nähe des über die Ereignistabelle 20 bekannten tatsächlichen Drehwinkels bleibt. Der dynamikbedingte Fehler der Winkeluhr 42 bleibt damit gering und ist berechenbar und gegebenenfalls bei dem Zählerstand ZS zu berücksichtigen. Da die Anpassung des Winkeluhrzählerstandes stets relativ zur letzten Messung, das heißt zum Eintritt des letzten Ereignisses erfolgt, kann eine in weiten Grenzen freie dynamische Entwicklung der über den Drehwinkelgeber 12 angezeigten Drehzahl elektronisch nachgebildet werden. Die Dynamik ist hierbei nur von den Hardwareanforderungen und den Maximalfrequenzen begrenzt.

In einer zweiten Variante wird die Winkeluhr 42 mit den aus den Grundtakten Co erzeugten Zähltakten Zt stets bis zum Eintritt des nächsten Ereignisses getaktet. Zu diesem Zeitpunkt wird die Differenz aus dem aus der Ereignistabelle 20 gelesenen Sollwert mit dem tatsächlichen Zählerstand ZS gebildet und im Ergebnis dessen eine Korrektur durchgeführt. Idealerweise ist diese Differenz genau 0, nämlich dann, wenn der Zählerstand ZS dem tatsächlichen Sollwinkel entspricht. Ist dagegen die Winkeluhr 42 zu weit gelaufen, wird eine Anzahl der folgenden Zähltakte Zt ausgeblendet. Es werden hierbei genausoviel Zähltakte Zt ausgeblendet wie die erwähnte Differenzbildung ergeben hat. Hat die Winkeluhr 42 dagegen den erwarteten Sollwert noch nicht erreicht, wird wie bereits weiter oben erwähnt, mit der vorgebbaren Höchstfrequenz f2 die negative Differenz an Zähltakten Zt eingeblendet. Bei dieser Variante treten ebenfalls keine Schwingungen auf, da von dem Soll-Ist-Vergleich innerhalb der Nachführschaltung 38 keine Rückkopplung auf die von dem Zähler erzeugten Grundtakte Co erfolgt. Es ist ebenfalls denkbar, daß zu einer Korrekturmöglichkeit die beiden erwähnten Varianten kombiniert werden, beispielsweise durch eine vom Ereigniszähler 18 indizierte Konzeptwahl.

Dadurch, daß die Ereignisse in der Ereignisaufbereitung 14 auf ihre Plausibilitäts-Flanken-Erkennung bewertet werden, werden der Zähler 30, die Zeittabelle 36, der Zähler 34, die Nachführschaltung 38 sowie der Korrekturzähler 44 nur mit einem "bereinigten" Ereignissignal beaufschlagt, so daß beispielsweise durch Signalprellen fehlerhaft gemeldete Ereignisse unberücksichtigt bleiben. Bei einem fehlerhaft durchgestellten Ereignis reagieren beide Varianten mit einer um ein Ereignis verschobenen Synchronisierung der Winkeluhr 42. Durch die verringerte Zeitdifferenz zwischen dem falschen Ereignis und dem vorherigen bzw. nachfolgendem Ereignis wird der Zähltakt Zt kurzzeitig stark erhöht. Gemäß der ersten Variante kann die Winkeluhr 42 bis zu einer maximalen Winkeldifferenz zwischen drei aufeinanderfolgenden Ereignissen falsch gehen. Bei der zweiten Variante kann eine Begrenzung durch den bereits erwähnten Überwachungszähler erreicht werden, der nach einer vorgegebenen Maximalzahl von Zähltakten Zt ohne den Eintritt eines zugehörigen Ereignisses weitere Zähltakte Zt ausblendet und damit kurzzeitig auf die erste Variante umschaltet.

Tritt jedoch hingegen anstelle eines zusätzlichen falschen Ereignisses ein ausfallendes Ereignis auf, läuft in der zweiten Variante die Winkeluhr 42 weiter, da dieser Ereignisausfall ignoriert wird. Erst bei dem darauffolgenden nächsten Ereignis bleiben die Zähltakte Zt aus. Da die Meßphase durch den Ereignisausfall länger wurde, ist die Frequenz der Zähltakte Zt entsprechend stark verringert und wird erst durch das nächstfolgende Ereignis wieder korrigiert, wobei eine um ein Ereignis verschobene Fehlsynchronisation bestehen bleibt. Hier ist eine Korrekturmöglichkeit denkbar, wenn eine entsprechende Schaltungsvariante der Ereignistabelle 20 eine Rückbeziehung des Winkeluhr-Ist-Wertes nicht mit dem Sollwert, sondern mit dem nachfolgenden Sollwert herstellen kann.

Bei der ersten beschriebenen Variante bleibt die Winkeluhr 42 bei einem ausfallenden Ereignis stehen. Nach dem Eintritt des nächsten Ereignisses läuft sie aufgrund der verlängerten Meßphase langsamer an und ist dann ebenfalls stets um ein Ereignis falsch synchronisiert. Hier sind ebenfalls Korrekturmöglichkeiten denkbar, indem die Zahl der ausgefallenen Zähltakte Zt mit der Winkeldifferenz des Sollwertes und dem folgenden Sollwert in Rückbeziehung gesetzt wird.

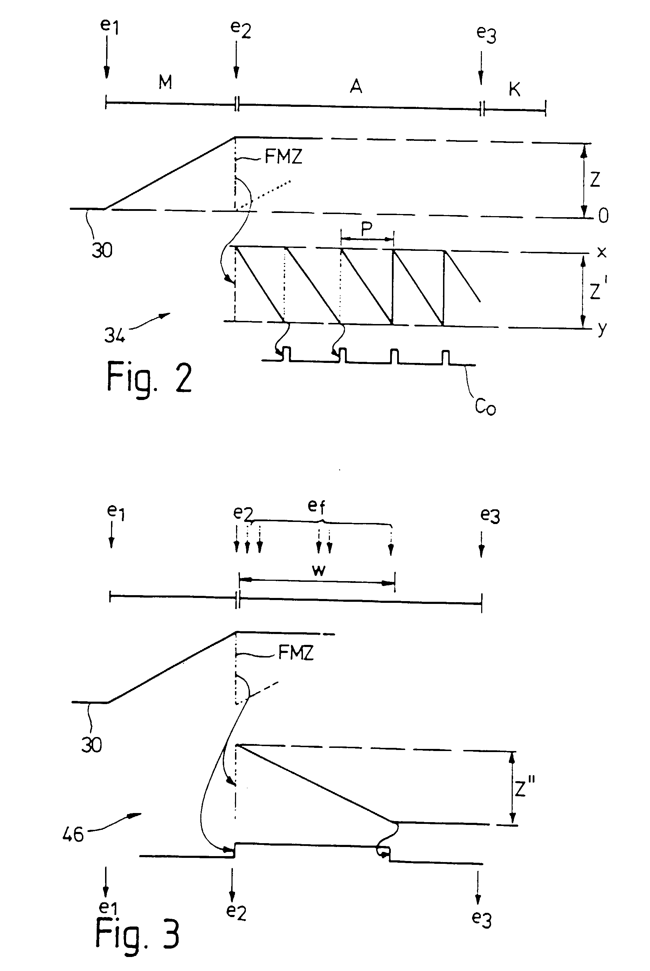

In der Figur 2 wird die Erzeugung des Grundtaktes Co mittels der Zähler 30 und 34 näher erläutert. Mit e1, e2 und e3 ist hier der Eintritt von drei aufeinanderfolgenden Ereignissen dargestellt. Mit Eintritt des Ereignisses el beginnt der hier mit einer Kennlinie dargestellte Zähler 30 einen vorgebbaren Wertebereich Z zu durchlaufen. Der Zähler 30 zählt dabei, beispielsweise beginnend von dem Wert 0, aufwärts. Mit Eintritt des Ereignisses e2 hat der Zähler einen bestimmten Wert erreicht, der durch die Zeitdifferenz zwischen dem letzten Ereignis e1 und dem aktuellen Ereignis e2 bestimmt wird. Der Wertebereich Z, den der Zähler 30 während der eine Meßphase M darstellenden Zeit zwischen dem Eintritt der Ereignisse e1 und e2 durchläuft, wird dabei durch die Frequenz, mit der der Zähler 30 gezählt wird, bestimmt. Diese Taktfrequenz des Zählers 30 kann dabei durch die Auswahl eines von der Dauer der Meßphase M abhängigen Teilerfaktors, in Figur 1 mit TFo bezeichnet, mittels einer an sich bekannten Frequenzteilung variiert werden. Mit dem Eintritt des Ereignisses e2 hat der Zähler 30 seinen Endwert erreicht, übermittelt diesen zum Zähler 34 und startet gleichzeitig den Zähler 34. Der Zähler 34 beginnt dabei einen Wertebereich Z' zu durchlaufen, wobei dieser, wie dargestellt, von dem durch den in der Zeittabelle 36 gespeicherten Zählerstand des Zählers 30 vorgegebenen Anfangswert x auf einen bestimmten vorgebbaren Endwert y, vorzugsweise 0, abwärts zählt. Mit Erreichen des Endwertes y setzt der Zähler 34 automatisch wieder auf seinen Anfangswert x hoch und beginnt erneut seinen Wertebereich Z' zu durchlaufen. Mit jedem Erreichen des Endwertes y, also dem Abschluß einer Zählperiode P, wird ein Impuls des Grundtaktes Co erzeugt. Der Zähler 34 durchläuft dabei seinen Wertebereich Z' so oft, bis durch den Eintritt eines nächsten Ereignisses e3 dieser wieder in den Ausgangszustand (entspricht dem Zustand zum Zeitpunkt des Eintritts des Ereignisses e2) versetzt wird. Entsprechend der zwischen dem Eintritt der Ereignisse e2 und e3 einer Auswertungsphase A entsprechenden Zeitspanne werden eine bestimmte Anzahl von Impulsen des Grundtaktes Co erzeugt. Der so erzeugte Grundtakt Co wird, wie bereits zu Figur 1 beschrieben, auf die Nachführschaltung 38 geführt und dient zur Bildung des die Winkeluhr 42 zählenden Zähltaktes Zt. An die Auswertungsphase A kann sich gegebenenfalls eine Korrekturphase K anschließen, in der der Korrekturzähler 44 die zum Sollwinkel aus der Ereignistabelle 20 noch fehlenden Grundtakte Co der Nachführschaltung 38 übermittelt. Durch diese beschriebene Zähleranordnung übernimmt der Zähler 30 die relative Zeitmessung zwischen dem letzten Ereignis el und dem aktuellen Ereignis e2, während der Zähler 34 die zeitlich verfeinerte Projektion auf das nächste Ereignis e3 übernimmt. In dem Moment, wo durch den Eintritt des Ereignisses e2 der Zähler 34 seinen Wertebereich Z' zu durchlaufen beginnt, kann der Zähler 30 auf seinen Ausgangswert 0 gleichzeitig zurückgesetzt werden und damit ein neuer Folgemeßzyklus FMZ beginnen. Durch diese aufeinanderfolgenden Meßzyklen FMZ wird erreicht, daß bei einer zeitlichen Änderung des Eintritts der Ereignisse e, die gleichzeitig eine Änderung der Dynamik des in Figur 1 erwähnten Geberrades und damit der Kurbelwelle repräsentieren, sofort auf die Erzeugung des Grundtaktes Co Einfluß genommen werden kann. Somit ist gewährleistet, daß der letztendlich über die in Figur 1 erwähnte Winkeluhr 42 elektronisch nachgebildete Stand der Kurbelwelle dem tatsächlichen Stand der Kurbelwelle entspricht.

In der Figur 3 ist die Möglichkeit einer Plausibilitätskontrolle dargestellt, mit der die Ereignisse el, e2 und e3 tatsächlich erkannt werden und eventuelle fehlerhafte Ereignisse ef ausgeblendet werden können. Dies wird dadurch erreicht, daß jedem Ereignis e nicht nur eine bekannte Winkeldifferenz zum nächsten Ereignis e, die über den gewählten Abstand der Zähne auf dem Geberrad bekannt ist, zugeordnet wird, sondern jedem Ereignis e auch eine Winkeldifferenz W zugeordnet wird, innerhalb der ankommende Ereignisse nicht berücksichtigt werden. Mit den bekannten Winkeldifferenzen zwischen den Ereignissen bzw. innerhalb eines Ereignisses sind aus den Meßzyklen FMZ auch die zu erwartenden Zeiten der Meßphase M bzw. der Auswertungsphase A bekannt. Es kann nunmehr eine bestimmte Winkeldifferenz W und damit eine bestimmte Zeitspanne festgelegt werden, innerhalb derer ankommende Ereignisse ef, die beispielsweise durch ein Signalprellen hervorgerufen werden können, ignoriert werden. Dies kann dadurch erreicht werden, daß mit dem Beginn der Auswertungsphase A ein Zähler 46 einen vorgebbaren Wertebereich Z" durchläuft, innerhalb dessen ankommende Ereignisse nicht auf die kurz nach einem interessierenden Ereignis (e2) auftreten, ausgeblendet werden. Somit werden im Ergebnis dieser Zählerschaltung nur noch erlaubte Ereignisse e1, e2 und e3 durchgestellt. Diese hier beschriebene Plausibitätserkennung kann beispielsweise Bestandteil der in Figur 1 dargestellten Ereignisaufbereitung 14 sein. Die Vorgabe der Winkeldifferenz W, innerhalb der ankommende Ereignisse nicht berücksichtigt werden, können wahlweise aus dem Ereigniszähler 18, der Ereignistabelle 20, der Ereignis-Differenzzeit-Tabelle 22, der Nachführung 38 oder dem Korrekturzähler 44 abgeleitet werden. Der Wertebereich Z" des Zählers 46 muß hierbei jedoch so eingestellt werden, daß die Dynamik des gesamten Systems nicht zu stark eingeschränkt wird, da an das nach dem Ereignis e2 auftretende nächste Ereignis e3 die Erwartung gestellt wird, daß dieses nicht vor Ablauf des Plausibilitäts-Zählers 46 eintritt.

Insgesamt kann mit der in den Figuren 1 bis 3 beschriebenen Anordnung nahezu jedes periodische digitale Sensorsignal ohne weitere äußere Eingriffe nach einer erstmaligen Initialisierung verarbeitet werden. Durch die integrierte Plausibilitätserkennnung und Plausibilitätskontrolle können bei der Anwendung in Brennkraftmaschinen Geberräder verwendet werden, deren Formen größere Fehler beinhalten dürfen. Es ist zum Beispiel der Einsatz von billigen ausgestanzten Geberrädern an Stelle von schweren, geschliffene Zähne aufweisende Geberrädern möglich. Die in der Auswertung verwendeten Vorgaben können entweder fest programmiert oder aber bei variablen programmierbaren Ereignistabellen auch im Betrieb nachgetragen werden. Hierdurch sind auch extreme Fehler bei nur wenig reduzierter erlaubter Dynamik, beispielsweise durch Rostfraß am Geberrad, korrigierbar.

Die digitale Geberradauswertung erlaubt Winkelbereiche von geradzahligen Vielfachen der Periode des Eingangssignals. Dadurch kann dasselbe Eingangssignal sowohl für eine Periodizität von 360° als auch für 720° verwendet werden. Dies ist erforderlich, wenn bei einem Viertaktverbrennungsmotor als Geberwinkel der Kurbelwellenwinkel mit herangezogen wird. Durch eine entsprechende Umprogrammierung der Ereignistabellen können verschiedene Geberräder alternativ verwendet werden. Bei einem Ausfall eines Geberrades kann beispielsweise in Brennkraftmaschinen auch für die Winkelbestimmung entweder ein auf der Nockenwelle oder ein auf der Kurbelwelle angeordneter Geber verwendet werden.

## Patentansprüche

1. Einrichtung zur elektronischen Nachbildung der Position eines Bauteiles, insbesondere der Winkelstellung einer Kurbelwelle, mit einem ersten Zähler (40, 42), dessen Zählerstand ein Maß für die jeweils eingenommene Position des Bauteiles ist, wobei der erste Zähler (40, 42) mit einem Zähltakt (Zt) gezählt wird, der von dem jeweiligen Eintritt eines periodischen Ereignisses, das jeweils eine Position des Bauteiles markiert, bestimmt wird, wobei ein zweiter Zähler (30) in Abhängigkeit des Eintritts eines ersten Ereignisses (e2) einen dritten, schneller als der zweite Zähler (30) zählenden, bis zum Eintritt eines nächsten Ereignisses (e3) mehrmals einen vorgebbaren Wertebereich (Z`) durchlaufenden Zähler (34) startet und mit jedem Erreichen eines Endwertes (y) des Wertebereiches (Z`) ein Impuls, eines den Zähltakt (Zt) ergebenden Grundtaktes (Co) erzeugt wird, wobei der Grundtakt (Co) einer den Zähltakt (Zt) bereitstellenden Nachführschaltung (39) zugeführt wird, durch die in Abhängigkeit von einem vorgebbaren Sollwert eine Korrektur des Zählabstands (ZS) des ersten Zählers (40, 42) durchführbar ist, dadurch gekennzeichnet, daß die Nachführschaltung (38) aus dem Sollwert und dem Zählerstand (ZS) eine Differenz bildet und in Abhängigkeit einer positiven oder negativen Differenz über ein Korrektursignal (KS) eine der Differenz entsprechende Anzahl von Zähltakten (Zt) ein- oder ausblendet.

2. Einrichtung nach Anspruch 1, dadurch gekennzeichnet, daß der zweite Zähler (30) aufwärts zählt.

3. Einrichtung nach einem der vorhergehenden Ansprüche, dadurch gekennzeichnet, daß der dritte Zähler (34) abwärts zählt.

4. Einrichtung nach einem der vorhergehenden Anspräche, dadurch gekennzeichnet, daß der Grundtakt (Co) durch den Eintritt der jeweils zwei letzten Ereignisse (e) neu bestimmt wird.

5. Einrichtung nach einem der vorhergehenden Ansprüche, dadurch gekennzeichnet, daß der Eintritt der Ereignisse (e) auf Plausibilität bewertete wird.

6. Einrichtung nach einem der vorhergehenden Ansprüche, dadurch gekennzeichnet, daß die zwischen dem Ereignis (e2) und dem nächsten erwarteten Ereignis (e3) innerhalb eines vorgegebenen Fensters (W) auftretende Ereignisse (ef) ausgeblendet werden.

7. Einrichtung nach einem der vorhergehenden Ansprüche, dadurch gekennzeichnet, daß die Differenz zu jedem Eintritt eines Ereignisses (e) neu bestimmt wird.

8. Einrichtung nach einem der vorhergehenden Ansprüche, dadurch gekennzeichnet, daß die Anzahl der zwischen periodisch wiederkehrenden Synchronisationsereignissen auftretenden Ereignisse (e) durch einen Ereigniszähler (18) gezählt und einer ein den Sollwert bereitstellenden Ereignistabelle (20) eingeschrieben wird.

9. Einrichtung nach Anspruch 8, dadurch gekennzeichnet, daß der Ereigniszähler (18) eine ein Zeitintervall zwischen zwei aufeinanderfolgenden Ereignissen (e) indizierenden Ereigniszeittabelle (22) lädt.

10. Einrichtung nach Anspruch 9, dadurch gekennzeichnet, daß die Ereigniszeittabelle (22) einen Teilerfaktor (TFo) bereitstellt, der eine Beeinflussung einer von einer Taktquelle (24) ausgehenden Frequenz (fo) durchführt und mit der beeinflußten Frequenz (fo/TFo) der Zähler (30) gezählt wird.

11. Einrichtung nach Anspruch 10, dadurch gekennzeichnet, daß mit der unbeeinflußten Frequenz (fO) der dritte Zähler (34) gezählt wird.

12. Einrichtung nach einem der vorhergehenden Anspräche, dadurch gekennzeichnet, daß die Ereignisse (e) durch einen einer Kurbelwelle einer Brennkraftmaschine zugeordneten Drehwinkelgeber (12) erzeugt werden.

13. Einrichtung nach einem der Anspräche 1 bis 10, dadurch gekennzeichnet, daß die Ereignisse (e) durch einen einer Nockenwelle einer Brennkraftmaschine zugeordneten Drehwinkelgeber erzeugt werden.

14. Einrichtung nach Anspruch 13, dadurch gekennzeichnet, daß der Drehwinkelgeber (12) ein Inkrementgebersystem ist, das eine bestimmte Anzahl von auf dem Umfang eines Geberrades angeordneten Zähnen besitzt und wenigstens eine einer bekannten Winkelstellung zugeordnete Zahnlücke vorgesehen ist.

15. Einrichtung nach Anspruch 14, dadurch gekennzeichnet, daß die Zähne äquidistant angeordnet sind.

16. Einrichtung nach Anspruch 14 oder 15, dadurch gekennzeichnet, daß die Zahnlücke das einer bekannten Winkelstellung entsprechende Synchronisationsereignis auslöst.

17. Einrichtung nach einem der Ansprüche 14 bis 16, dadurch gekennzeichnet, daß der Drehwinkelgeber (12) ein Segmentgebersystem ist, das eine bestimmte Anzahl von auf dem Umfang eines Geberrades angeordneten Segmenten besitzt und Segmentanfänge und Segmentenden jeweils bekannte Winkelstellungen haben.

## Claims

1. Device for electronically simulating the position of a component, in particular the angular position of a crankshaft, having a first counter (40, 42) whose counter state is a measure of the respectively assumed position of the component, the first counter (40, 42) being counted with a counting clock (Zt) which is determined by the respective occurrence of a periodic event which in each case marks a position of the component, a second counter (30) starting, as a function of the occurrence of a first event (e2), a third counter (34) which counts more quickly than the second counter (30) and repeatedly runs through a prescribable value range (Z') until the occurrence of a subsequent event (e3) and each time a final value (y) of the value range (Z') is reached a pulse of a basic clock (Co) which produces the counting clock (Zt) being generated, the basic clock (Co) being fed to a readjustment circuit (38) which provides the counting clock (Zt) and and by means of which a correction of the counter state (ZS) of the first counter (40, 42) can be carried out as a function of a prescribable desired value, characterized in that the readjustment circuit (38) forms a difference between the desired value and the counter state (ZS) and inserts or masks out, as a function of a positive or negative difference, a number of counting clocks (Zt) corresponding to the difference by means of a correction signal (KS).

2. Device according to Claim 1, characterized in that the second counter (30) counts upwards.

3. Device according to one of the preceding Claims, characterized in that the third counter (34) counts downwards.

4. Device according to one of the preceding Claims, characterized in that the basic clock (Co) is determined again by the occurrence of the respective last two events (e).

5. Device according to one of the preceding Claims, characterized in that the occurrence of the events (e) is evaluated for plausibility.

6. Device according to one of the preceding Claims, characterized in that the events (ef) occurring between the event (e2) and the subsequent expected event (e3) within a prescribed window (W) are masked out.

7. Device according to one of the preceding claims, characterized in that the difference is determined again on each occurrence of an event (e).

8. Device according to one of the preceding Claims, characterized in that the number of events (e) occurring between periodically recurring synchronization events is counted by an event counter (18) and is written into an event table (20) which provides the desired value.

9. Device according to Claim 8, characterized in that the event counter (18) loads an event clock table (22) which indexes a time interval between two successive events (e).

10. Device according to Claim 9, characterized in that the event clock table (22) provides a divisor factor (TFo) which carries out influencing of a frequency (fo) which originates from a clock source (24) and the counter (30) is counted with the influenced frequency (fo/FTo).

11. Device according to Claim 10, characterized in that the third counter (34) is counted with the uninfluenced frequency (fO).

12. Device according to one of the preceding Claims, characterized in that the events (e) are generated by a rotational angle sensor (12) which is assigned to a crankshaft of an internal combustion engine.

13. Device according to one of Claims 1 to 10, characterized in that the events (e) are generated by a rotational angle sensor which is assigned to a camshaft of an internal combustion engine.

14. Device according to Claim 13, characterized in that the rotational angle sensor (12) is an increment sensor system which has a specific number of teeth arranged on the circumference of a sensor wheel and at least one tooth gap assigned to a known angular position is provided.

15. Device according to Claim 14, characterized in that the teeth are arranged equidistantly.

16. Device according to Claim 14 or 15, characterized in that the tooth gap triggers the synchronization event corresponding to a known angular position.

17. Device according to one of Claims 14 to 16, characterized in that the rotational angle sensor (12) is a segment sensor system which has a specific number of segments arranged on the circumference of a sensor wheel and starts of segments and ends of segments each have known angular positions.

## Revendications

1. Dispositif de simulation électronique de la position d'une pièce, en particulier de la position angulaire d'un arbre de vilebrequin, comprenant un premier compteur (40, 42) dont l'état de comptage est une mesure de la position respectivement prise par la pièce, le premier compteur (40, 42) fonctionnant avec un cycle de comptage (Zt), déterminé par l'entrée correspondante d'un événement périodique, qui repère respectivement une position de la pièce, un second compteur (30) faisant démarrer, en fonction de l'entrée d'un premier événement (e2), un troisième compteur (34) qui compte plus vite que le deuxième compteur (30) et qui jusqu'à l'entrée d'un événement suivant (e3), parcourt plusieurs fois une zone de valeurs (Z') que l'on peut définir au préalable et produit, chaque fois qu'est atteinte une valeur finale (y) de la zone de valeurs (Z'), une impulsion d'un cycle de base (Co) dont résulte le cycle de comptage (Zt), le cycle de base (Co) étant amené à un circuit de poursuite (39) procurant le cycle de comptage (Zt), circuit de poursuite par l'intermédiaire duquel on peut réaliser, en fonction d'une valeur de consigne que l'on peut définir au préalable, une correction de l'écart (ZS) du premier compteur (40, 42),
caractérisé en ce que
le circuit de poursuite (38) forme une différence à partir de la valeur de consigne et de l'état du compteur (ZS), et, en fonction d'une différence positive ou négative superpose ou supprime, au moyen d'un signal de correction (KS), un nombre, de cycles de comptage (Zt) correspondant à la différence.

2. Dispositif selon la revendication 1,
caractérisé en ce que
le deuxième compteur (30) compte en montant.

3. Dispositif selon l'une des revendications précédentes,
caractérisé en ce que
le troisième compteur (34) compte en descendant.

4. Dispositif selon l'une des revendications précédentes,
caractérisé en ce que
le cycle de base (Co) est à nouveau déterminé par respectivement l'entrée des deux derniers événements (e).

5. Dispositif selon l'une des revendications précédentes,
caractérisé en ce que
l'on évalue la vraisemblance de l'entrée des événements (e).

6. Dispositif selon l'une des revendications précédentes,
caractérisé en ce que
les événements (ef) qui surviennent entre l'événement (e2) et l'événement suivant attendu (e3) à l'intérieur d'une fenêtre prédéfinie (W), sont supprimés.

7. Dispositif selon l'une des revendications précédentes,
caractérisé en ce que
l'on détermine à nouveau la différence par rapport à chaque entrée d'un événement (e).

8. Dispositif selon l'une des revendications précédentes,
caractérisé en ce que
le nombre des événements qui surviennent entre des événements de synchronisation (e) qui se reproduisent périodiquement, est compté par un compteur d'événements (18) et enregistré dans une table d'événements (20) fournissant la valeur de consigne.

9. Dispositif selon la revendication 8,
caractérisé en ce que
le compteur d'événements (18) charge une table de temps d'événements (22) indexant un intervalle de temps entre deux événements consécutifs (e).

10. Dispositif selon la revendication 9,
caractérisé en ce que
• la table de temps d'événements (22) tient prêt un facteur de division (TFo) qui exerce une influence sur une fréquence sortant d'une source de synchronisation (24), et
• le compteur (30) fonctionne avec la fréquence influencée (fo/TFo).

11. Dispositif selon la revendication 10,
caractérisé en ce que
le troisième compteur (34) fonctionne avec la fréquence non influencée (fo).

12. Dispositif selon l'une des revendications précédentes,
caractérisé en ce que
les événements (e) sont produits par un détecteur d'angle de rotation (12) associé à l'arbre de vilebrequin d'un moteur à combustion interne.

13. Dispositif selon l'une des revendications 1 à 10,
caractérisé en ce que
les événements (e) sont produits par un détecteur d'angle de rotation associé à l'arbre à cames d'un moteur à combustion interne.

14. Dispositif selon la revendication 13,
caractérisé en ce que
le détecteur d'angle de rotation (12) est un système de détection à incréments qui possède un nombre déterminé de dents disposées sur le pourtour d'une roue phonique, et est pourvu d'au moins un intervalle de dents associé à une position angulaire connue.

15. Dispositif selon la revendication 14,
caractérisé en ce que
les dents sont disposées de façon équidistante.

16. Dispositif selon la revendication 14 ou 15,
caractérisé en ce que
l'intervalle de dents déclenche l'événement de synchronisation qui correspond à une position angulaire connue.

17. Dispositif selon l'une des revendications 14 à 16,
caractérisé en ce que
• le détecteur d'angle de rotation (12) est un système de détection de segments qui possède un nombre déterminé de segments disposés sur le pourtour d'une roue phonique, et
• les débuts des segments et les fins des segments ont respectivement des positions angulaires connues.
